# EUROPÄISCHE PATENTANMELDUNG

(11) **EP 2 947 609 A1**
(43) Veröffentlichungstag der Anmeldung: **25.11.2015**
(21) Anmeldenummer: 14169371.3
(22) Anmeldetag: 21.05.2014
(51) Int. Cl.: G06Q 10/06, G06Q 10/10

(54) **Call - Center - Bearbeitungssystem und Arbeitsverfahren hierzu**

(71) Anmelder: Samhammer AG, 92637 Weiden (DE)
(72) Erfinder: Samhammer, Norbert, 92637 Weiden (DE)
(74) Vertreter: Lang, Christian

(57) **Zusammenfassung**

Die vorliegende Erfindung betrifft ein Call - Center - Bearbeitungssystem mit einer Datenverarbeitungsanlage (1) mit mehreren Bearbeitungsstationen (3,4,5), an denen jeweils ein Bearbeiter Tickets bearbeiten kann, und einem Ticketpool (31), in dem eine Anzahl zu bearbeitender Tickets gespeichert sind, wobei ein Zuordnungsmodul (ATD Automatic Ticket Distribution) (32), welches anhand vordefinierter Parameter ein offenes Ticket aus dem Ticketpool automatisiert einer Bearbeitungsstation (3,4,5) zur Bearbeitung zuordnet, sowie ein Verfahren hierzu und ein Softwareprodukt.

## Beschreibung

### HINTERGRUND DER ERFINDUNG

### GEBIET DER ERFINDUNG

Die vorliegende Erfindung betrifft ein Call - Center - Bearbeitungssystem mit einer Datenverarbeitungsanlage mit mehreren Bearbeitungsstationen, mit denen jeweils ein Bearbeiter Vorgänge, wie Anfragen, (auch Tickets genannt) bearbeiten kann, und mit einem Vorgangspool (auch Ticketpool genannt), in dem eine Anzahl Tickets gespeichert ist, sowie ein Verfahren zur Bearbeitung von Tickets, insbesondere mit einem Call - Center - Bearbeitungssystem gemäß der vorliegenden Erfindung.

### STAND DER TECHNIK

Call - Center zur Bearbeitung und Beantwortung von Kundenanfragen sind in der Praxis weit verbreitet, da damit ein Unternehmen seinen Kunden auf einfache Weise oftmals rund um die Uhr die Möglichkeit gibt, mit dem Unternehmen in Kontakt zu treten, um Anfragen zu stellen oder Probleme zu lösen. Für ein Unternehmen stellt der Betrieb eines Call - Centers jedoch einen nicht unerheblichen Aufwand dar, da viele Mitarbeiter beschäftigt werden müssen, um die eingehenden Kundenanfragen, sogenannte Vorgänge oder Tickets, in möglichst kurzer Zeit mit hoher Qualifikation beantworten zu können. Da der Eingang der Kundenanfragen nicht vorhersehbar ist und zeitlich starken Schwankungen unterworfen sein kann, kann es zu Kapazitätsengpässen oder mangelnder Auslastung der Mitarbeiter kommen. Deshalb ist es ein Ziel die Organisation und die technische Ausgestaltung von Call - Centern so zu gestalten, dass ein möglichst effektiver Personaleinsatz möglich wird, um Tickets qualifiziert und möglichst schnell beantworten zu können.

Aus diesem Grund ist es bereits bekannt, informationstechnische Einrichtungen, wie Datenverarbeitungsanlagen und entsprechende Softwareprodukte einzusetzen, um die Mitarbeiter von Call - Centern zu unterstützen und die Arbeitsabläufe effektiv zu gestalten. So wird beispielsweise bei bekannten Call - Center - Bearbeitungssystemen und entsprechenden Softwareprodukten hierfür bzw. den zu Grunde liegenden Arbeitsverfahren ein Ticketpool für Tickets bereitgestellt, in dem die eingegangenen und zu bearbeitenden Tickets eingespeichert werden, sodass sie den Mitarbeitern des Call - Centers zur Bearbeitung zu Verfügung stehen. Die einzelnen Bearbeiter des Call - Center - Bearbeitungssystems können von ihren Bearbeitungsstationen aus auf den Ticketpool zugreifen und sich die entsprechenden Tickets zur Bearbeitung entnehmen. Hierbei kann der Bearbeiter entweder die Tickets entsprechend der Reihenfolge des Eingangs entnehmen und bearbeiten oder die V Tickets entsprechend bestimmter Kriterien, wie Dringlichkeit oder eigener Kompetenz, entnehmen und sie dann bearbeiten. Dies erfordert jedoch für den einzelnen Bearbeiter einen hohen Zeitaufwand für die Sichtung der in den Tickets enthaltenen Anfragen und des zu Grunde liegenden Problems bzw. Interesses des Kunden, sodass die Auswahl der als nächstes zu bearbeitenden Tickets sehr zeitaufwändig ist, da der Bearbeiter zunächst den Inhalt der Anfrage bzw. des zu Grunde liegenden Problems erfassen muss, um danach bewerten zu können, ob er diese Anfrage bearbeiten kann oder nicht. Entsprechend kann der Anteil der Bearbeitungszeit, welcher für die Auswahl des zu bearbeitenden Tickets aufgewendet wird, sehr hoch sein und 10 bis 50 % der gesamten Bearbeitungszeit einnehmen.

### OFFENBARUNG DER ERFINDUNG

### AUFGABE DER ERFINDUNG

Es ist deshalb Aufgabe der vorliegenden Erfindung verbesserte technische Hilfsmittel in Form eines Call - Center - Bearbeitungssystems zur Bearbeitung von Tickets sowie ein entsprechendes Arbeitsverfahren zur Verfügung zu stellen, welche eine effiziente Bearbeitung von Tickets ermöglichen. Gleichzeitig sollen das System und das entsprechende Verfahren einfach aufgebaut bzw. einfach durchführbar sein.

### TECHNISCHE LÖSUNG

Diese Aufgabe wird gelöst durch ein Call - Center - Bearbeitungssystem mit den Merkmalen des Anspruchs 1, einem Arbeitsverfahren zur Bearbeitung von Tickets mit den Merkmalen des Anspruchs 9, sowie einem Softwareprodukt zur Durchführung des Verfahrens bzw. zum Betrieb eines Call - Center - Bearbeitungssystems mit den Merkmalen des Anspruchs 16. Weitere Ausgestaltungen sind Gegenstand der abhängigen Ansprüche.

Die Erfindung geht davon aus, dass durch eine Automatisierung der Zuordnung von Tickets an einzelne Bearbeiter in einem Call - Center - Bearbeitungssystem die Verteilung der Anfragen an die einzelnen Bearbeitungsstationen bzw. die dort arbeitenden Bearbeiter effektiver und mit merklicher Einsparung von Bearbeitungszeit erfolgen kann. Die Effizienzsteigerung ergibt sich hierbei zum einen dadurch, dass die jeweiligen Bearbeiter von der Auswahl der zu bearbeitenden Tickets entlastet werden, da dies durch ein Zuordnungsmodul (ATD Automatic Ticket Distribution genannt) des Call - Center - Bearbeitungssystems automatisiert erfolgt. Zum anderen ergibt sich die Effizienzsteigerung dadurch, dass durch die automatisierte Zuordnung von zu bearbeitenden Tickets zu den Bearbeitern an den Bearbeitungsstationen des Call - Center - Bearbeitungssystems die Zuordnungen nach objektiven Kriterien erfolgt und nicht mehr nach subjektiven Kriterien eines Bearbeiters. Auf diese Weise kann sichergestellt werden, dass mit einer höheren Wahrscheinlichkeit die "richtige" Anfrage zu dem "richtigen" Bearbeiter kommt und objektive Kriterien, wie z.B. Dringlichkeit, besser eingehalten werden.

Entsprechend weist ein erfindungsgemäßes Call - Center - Bearbeitungssystem eine Datenverarbeitungsanlage mit mehreren Bearbeitungsstationen auf, an denen die entsprechenden Bearbeiter über geeignete Ausgabegeräte und Eingabegeräte mit dem Call - Center - Bearbeitungssystem kommunizieren können, um die von dem Call - Center - Bearbeitungssystem verwalteten Tickets zu bearbeiten. Das Call - Center - Bearbeitungssystem weist hierzu einen Ticketpool auf, in dem eine Anzahl offener Tickets gespeichert ist, um bearbeitet zu werden. Gemäß der Erfindung weist das Call - Center - Bearbeitungssystem ein Zuordnungsmodul (ATD Automatic Ticket Distribution genannt) auf, mit dessen Hilfe die Zuordnung der in dem Ticketpool enthaltenen Tickets zu den einzelnen Bearbeitungsstationen und somit zu den daran arbeitenden Bearbeitern erfolgt. Das Zuordnungsmodul (ATD Automatic Ticket Distribution) ordnet die als nächstes zu bearbeitenden Tickets entsprechend vordefinierter Parameter automatisiert den Bearbeitungsstationen zu.

Die Datenverarbeitungsanlage, mit der das Call - Center - Bearbeitungssystem realisiert werden kann, kann durch ein Netzwerk mit mindestens einem Computer und mehreren Ein- und Ausgabegeräten gebildet sein, wobei eine Bearbeitungsstation durch mindestens ein Eingabegerät und mindestens ein Ausgabegerät gebildet sein kann. Auf dem mindestens einen Computer kann die entsprechende Software zur Abbildung des Call - Center - Bearbeitungssystems und zur Durchführung des Arbeitsverfahrens zur Bearbeitung von Tickets implementiert sein. Anstelle einer Ausführungsform, bei der die einzelne Bearbeitungsstation lediglich durch Ein- und Ausgabegeräte gebildet sind, ist es jedoch auch möglich an jeder Bearbeitungsstation einen separaten Computer vorzusehen, der dann durch ein entsprechendes Netzwerk mit einem Zentralrechner verbunden sein kann. Entsprechend kann in den einzelnen Bearbeitungsstation eine sogenannte Client - Software installiert sein, die mit einem entsprechenden Softwareprodukt, das am Zentralrechner installiert ist, zusammenwirkt, sodass gemeinsam das Call - Center - Bearbeitungssystem realisiert ist.

Der Ticketpool kann in einer Speichereinheit der Datenverarbeitungsanlage, insbesondere des Zentralrechners gespeichert sein und als Datenbank ausgebildet sein, aus der das Zuordnungsmodul (ATD Automatic Ticket Distribution) die entsprechenden Tickets entnehmen und an den Ausgabegeräten der Bearbeitungsstationen, z.B. einem Bildschirm, zur Bearbeitung für die Bearbeiter darstellen kann.

Um in den Ticketpool Tickets einspeichern zu können, kann das Call - Center - Bearbeitungssystem ein Eingabemodul aufweisen, mit dessen Hilfe die Tickets erfasst werden können. Hierbei kann es sich einerseits um die Eingabe durch Mitarbeiter des Call - Centers handeln, die eine Anfrage telefonisch aufnehmen und entsprechend über das Eingabemodul in das Call - Center - Bearbeitungssystem eingeben. Alternativ hierzu können auch elektronische Anfragen über E-Mail oder das Internet (Chats und Foren) direkt durch das Eingabemodul erfasst werden.

Das Eingabemodul kann ein Bewertungsmodul umfassen, mit dem die einzelnen aufgenommenen Tickets bewertet und/oder kategorisiert werden. Beispielsweise kann durch einen Bearbeiter oder automatisiert einem Ticket über das Bewertungsmodul ein Schwierigkeitsgrad zugeordnet werden, wenn beispielsweise anhand von Stichworten, die die Anfrage oder das Problem beschreiben, festgestellt wird, dass ein hoher Überdeckungsgrad mit bereits früher gestellten Anfragen vorhanden ist. Bei der Kategorisierung kann über das Bewertungsmodul die Anfrage einer bestimmen Kategorie zugeordnet werden, beispielsweise eine Anfrage zur Rechnungsstellung der Kategorie Rechnungswesen, eine Angebotsanfrage der Kategorie Angebot, eine technische Anfrage der Kategorie Technik etc.. Bei einer automatisierten Erfassung des Tickets, beispielsweise über Interneteingabe des Kunden, können entsprechende Kategorisierungsabfragen vorgesehen werden, damit das Bewertungsmodul die Kategorisierung vornehmen kann.

Entsprechend können zu einem Ticket verschiedenste Informationen bezüglich des Anfragestellers, des Inhalts der Anfrage, des Schwierigkeitsgrads, der Anfragekategorie, des Zeitpunkts der Anfrage, des erwarteten oder angegeben Zeitpunkts der Beantwortung etc. erfasst und im Call - Center - Bearbeitungssystem gespeichert werden. Hierzu kann das Call - Center - Bearbeitungssystem entsprechende elektronische Speichermittel aufweisen.

Da die entsprechenden Vorgangsdaten über verschiedene Kommunikationsgeräte, wie beispielsweise Telefon, Internet und dergleichen in das Call - Center - Bearbeitungssystem eingegeben, oder diesem zur Verfügung gestellt werden können, kann das Call - Center - Bearbeitungssystem entsprechende Kommunikationsgeräte aufweisen, die mit der Datenverarbeitungsanlage verbunden sind oder durch sie bereitgestellt werden, wie beispielsweise Geräte zur Internettelefonie, Tablets, Smartphones oder dergleichen.

Das Zuordnungsmodul (ATD Automatic Ticket Distribution) kann insbesondere als selbstlernendes, intelligentes System ausgebildet werden, welches durch Rückkopplung eine ständige Optimierung und Verbesserung der Zuordnung ermöglicht. Zu diesem Zweck können in einem Erfassungsmodul Lösungsparameter erfasst werden, die zur Variation der vordefinierten Parameter zur Zuordnung von Tickets zu Bearbeitungsstationen bei der Rückkopplung verwendet werden. Die Lösungsparameter können beispielsweise Parameter sein, die die Lösungsgeschwindigkeit, also die Zeitspanne von dem Erfassen des Tickets bis zu dessen Abschluss, die Qualität der Lösung, die Lösungshäufigkeit und dergleichen beschreiben.

Die Qualität der Lösung kann beispielsweise dadurch angegeben werden, dass die Kunden bei der Beantwortung der Anfrage gebeten werden, die angebotene Lösung zu bewerten.

Die Lösungshäufigkeit kann auf einen bestimmten Bearbeiter bezogen sein oder auf die Art des Problems. So kann beispielsweise zu jedem Bearbeiter, der im Call - Center - Bearbeitungssystem mit einem Bearbeiterprofil gespeichert und erfasst sein kann, gespeichert werden, wie viel Prozent der ihm vorgelegten Tickets erfolgreich abgeschlossen werden konnten. Entsprechend kann auch für bestimmte Kategorien von Anfragen eine Statistik erstellt werden, wie hoch die Häufigkeit bzw. Wahrscheinlichkeit einer Lösung in einem bestimmten Bereich erfolgt bzw. zu erwarten ist. Zu den entsprechenden Parametern können auch Vergleichswerte dieser Parameter als Lösungsparameter verwendet und gespeichert werden, beispielsweise die relative Qualität der Lösung eines Bearbeiters relativ zu anderen Bearbeitern bzw. zu anderen Kategorien von Tickets. Entsprechend kann das Call - Center - Bearbeitungssystem auch eine Speichereinheit zur Speicherung sämtlicher Vorgangsdaten und/oder Bearbeiterdaten aufweisen.

Die Zuordnung der zu bearbeitenden Tickets zu den Bearbeitungsstationen durch das Zuordnungsmodul (ATD Automatic Ticket Distribution) kann einzeln oder zusammengefasst in Gruppen erfolgen, wenn beispielsweise durch das Zuordnungsmodul (ATD Automatic Ticket Distribution) erkannt wird, dass verschiedene gleichartige Fragen im Zuordnungspool enthalten sind, sodass ein einzelner Bearbeiter in effizienter Weise mehrere Anfragen zu dem gleichen Thema gleichzeitig bearbeiten kann. Selbstverständlich ist auch eine gleichzeitige Zuordnung von mehreren Tickets an verschiedene Bearbeitungsstationen und Bearbeiter möglich, sodass parallel durch das Zuordnungsmodul (ATD Automatic Ticket Distribution) mehrere zu bearbeitende Tickets zugeordnet werden können.

Die Zuordnung von aktuell zu bearbeitenden Tickets zu den Bearbeitungsstationen kann auf Anforderung einer Bearbeitungsstation oder automatisiert auf Basis vorgegebener Kriterien und/oder erfasster Daten erfolgen. Beispielsweise kann durch das Call - Center - Bearbeitungssystem festgestellt werden, dass eine Bearbeitungsstation ein Ticket abgeschlossen hat und daraufhin ein neues Ticket der Bearbeitungsstation zuordnen.

Die vordefinierten Parameter zur Zuordnung von Tickets an die einzelnen Bearbeitungsstationen können die Qualifikation des an der Bearbeitungsstation arbeitenden bzw. angemeldeten Bearbeiters, dessen Erfahrung und/oder die Art und Anzahl der früher bereits von diesem Bearbeiter bearbeiteten Tickets umfassen. Auch die Bewertung und/oder die Kategorisierung des Tickets können ebenfalls als Parameter für die Zuordnung der Tickets zu den einzelnen Bearbeitungsstationen herangezogen werden.

Durch das erfindungsgemäße Call - Center - Bearbeitungssystem und das entsprechende Arbeitsverfahren mit automatisiertem Auswahlverfahren zur Bearbeitung von Tickets kann sich der jeweilige Bearbeiter voll auf die Lösung der Anfrage konzentrieren und ist nicht mehr mit der manuellen Auswahl von Tickets, welche als nächstes zur Bearbeitung anstehen, beschäftigt. Durch die objektiven Kriterien der automatisierten Zuordnung liegt eine höhere Trefferwahrscheinlichkeit bezüglich der Lösungskompetenz des ausgewählten Mitarbeiters vor. Da die Auswahlfunktionen für die Auswahl eines Tickets für den Bearbeiter entfallen, ist die Bearbeitung und Einarbeitung eines entsprechenden Bearbeiters einfacher und die Mitarbeiterzufriedenheit steigt, da die Erfolgserlebnisse bei der Lösung der Anfragen höher und die Anzahl der Misserfolge niedriger sind. Die Gesamtbearbeitungszeit mindert sich und somit ist ein geringerer Bedarf an Personal erforderlich.

### KURZBESCHREIBUNG DER FIGUREN

Die beigefügten Zeichnungen zeigen in rein schematischer Form in
- Fig. 1: eine Darstellung eines erfindungsgemäßen Call - Center - Bearbeitungssystems; und in
- Fig. 2: eine weitere Darstellung des Call - Center - Bearbeitungssystems aus Fig. 1.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich werden. Allerdings ist die Erfindung nicht auf dieses Ausführungsbeispiel beschränkt.

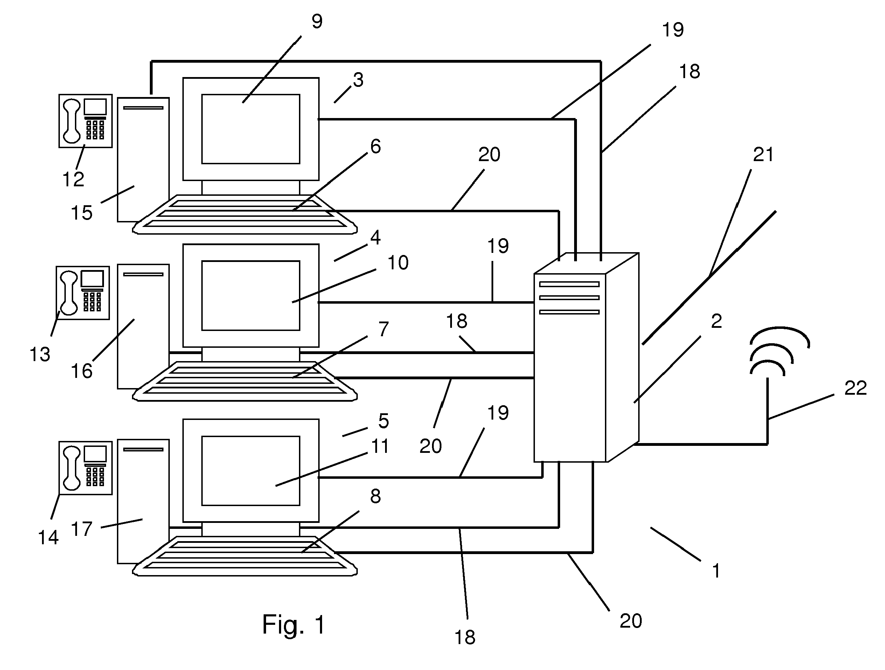

Die Fig. 1 zeigt eine Datenverarbeitungsanlage 1, durch welche ein Call - Center - Bearbeitungssystem gemäß der vorliegenden Erfindung verwirklicht ist. Die Datenverarbeitungsanlage 1 umfasst einen Zentralrechner 2, der über verschiedene Leitungen 18, 19, 20 mit mehreren Bearbeitungsstationen 3, 4, 5 verbunden ist. Eine Bearbeitungsstation umfasst jeweils eine Tastatur 6, 7, 8 als Eingabegerät und jeweils einen Bildschirm 9, 10, 11 als Ausgabegerät. Zudem ist jeder Bearbeitungsstation 3, 4, 5 ein Telefon 12, 13, 14 als Kommunikationsgerät zugeordnet.

Bei dem gezeigten Ausführungsbeispiel der Fig. 1 kann jede Bearbeitungsstation 3, 4, 5 einen eigenen Computer 15, 16, 17 aufweisen. Allerdings ist es auch vorstellbar, dass die Bearbeitungsstationen 3, 4, 5 lediglich Ein- und Ausgabegeräte umfassen, sodass die gesamten Rechenoperationen auf dem Zentralrechner 2 ausgeführt werden. Im Übrigen bilden die Bearbeitungsstationen 3, 4, 5 mit dem Zentralrechner 2 ein Computernetzwerk, sodass beispielsweise ein Teil der Software zur Verwirklichung des Call - Center - Bearbeitungssystems auf den Computern 15, 16, 17 (Clients) der Bearbeitungsstation 3, 4, 5 ausgeführt wird und ein Teil im Zentralrechner 2. Entsprechend können die Kommunikationsleitungen 18, 19, 20 zwischen Zentralrechner 2 und den Bearbeitungsstationen 3, 4, 5 gestaltet werden. Dies bedeutet, dass entweder nur die Datenleitungen 19, 20 zur Verbindung des Zentralrechners 2 mit den Ausgabe und Eingabegeräten vorhanden sind oder die Netzwerkleitungen 18 zur Verbindung der Client - Computer 15, 16, 17 der Bearbeitungsstationen 3, 4, 5 mit dem Zentralrechner 2. In der Fig. 1 sind jedoch sämtliche Kommunikationsleitungen 18, 19, 20 dargestellt.

Die Datenverarbeitungsanlage 1 in Form eines Computernetzwerks bzw. eines Netzwerks mit einem oder mehreren Rechnern und entsprechenden Ein- und Ausgabegeräten kann zudem weitere Kommunikationsmittel 21, 22 aufweisen, beispielsweise in Form von Daten- und Kommunikationsleitungen 21 zur Verbindung mit einem weltweiten Computernetzwerk und/oder Sende- und Empfangseinheiten 22 zur drahtlosen Verbindung mit Computer- und/oder Telefonnetzwerken oder sonstigen Kommunikationsnetzwerken ausgestattet sein. Beispielsweise ist es denkbar, die separaten Telefonapparate 12, 13, 14 in die Datenverarbeitungsanlage 1 zu integrieren und beispielsweise Telefongespräche über die Datenverarbeitungsanlage 1 und daran angeschlossene Head - Sets zu führen.

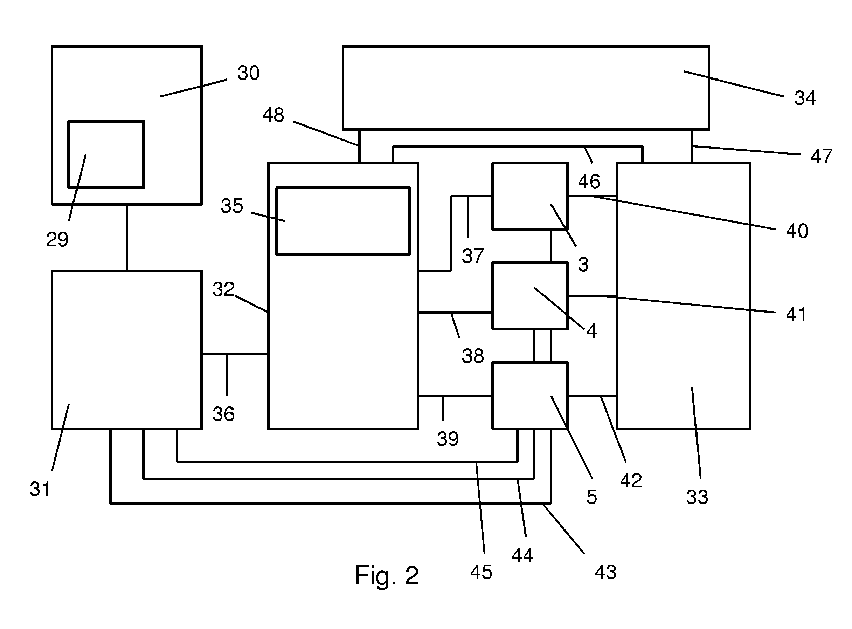

In der in der Fig. 1 dargestellten Datenverarbeitungsanlage 1 kann mittels eines entsprechenden Softwareprogrammprodukts ein Call - Center - Bearbeitungssystem verwirklicht werden, wie es schematisch in Fig. 2 dargestellt ist.

Außer den Bearbeitungsstationen 3, 4 und 5, die in Fig. 2 dargestellt sind, können die übrigen Komponenten und Verbindungen unter den Komponenten in dem Zentralrechner 2 realisiert werden oder auf die Computer 15,16,17 der Bearbeitungsstationen 3,4,5 und den Zentralrechner 2 verteilt sein.

Das Call - Center - Bearbeitungssystem umfasst ein Eingabemodul 30, mit dessen Hilfe Tickets aufgenommen und erfasst werden können. Beispielsweise kann das Eingabemodul 30 ermöglichen, dass ein Nutzer des Call - Center - Bearbeitungssystems eine telefonisch aufgenommene Anfrage in das System eingibt, wobei beispielsweise der Gegenstand der Anfrage, die Identität des Anfragenden, eine Bearbeitungsnummer und dergleichen erfasst werden können. Bei der Eingabe eines zu bearbeitenden, also offenen Tickets kann gleichzeitig eine Bewertung bzw. Kategorisierung des Tickets erfolgen, beispielsweise in der Weise, dass bereits eine Zuordnung zu einem bestimmten Problemfeld, beispielsweise einem technischen Problem, einem Zahlungsproblem oder dergleichen erfolgt, oder dass eine Einschätzung der Schwierigkeit der Problemlösung, beispielsweise hinsichtlich der Tatsache, ob es sich um ein bekanntes oder ein völlig neues Problem handelt, vorgenommen wird. Hierzu kann in dem Eingabemodul 30 ein Bewertungsmodul 29 realisiert sein, mit dem die Bewertung und/oder Kategorisierung des einzugebenden Tickets erfolgen kann.

Neben einer telefonischen Aufnahme eines neuen Tickets können Tickets auch durch direkte Eingabe des Anfragenden über ein Computernetzwerk (Internet, E-Mail, Chat Foren) oder dergleichen realisiert werden.

Durch die Erfassung eines Tickets durch das Eingabemodul 30 werden in einem Ticketpool 31 eine Vielzahl von offenen Tickets gespeichert, die abzuarbeitende Anfragen darstellen. Zur Verteilung der offenen, zu bearbeitenden Tickets an die Bearbeitungsstationen 3, 4, 5 ist ein Zuordnungsmodul (ATD Automatic Ticket Distribution) 32 vorgesehen, welches über die Verbindung 36 einen oder mehrere / Tickets aus dem Ticketpool 31 entnimmt und sie über entsprechende Kommunikationsleitungen 37, 38 und 39 den einzelnen Bearbeitungsstationen 3, 4, 5 zuführt. Das Zuordnungsmodul (ATD Automatic Ticket Distribution) 32 ordnet die offenen Tickets anhand vordefinierter Parameter einer bestimmten Bearbeitungsstation 3, 4, 5 zu.

Die vordefinierten Parameter, die für die Zuordnung der Tickets zu den Bearbeitungsstationen herangezogen werden können, können beispielsweise die Qualifikation des an den Bearbeitungsstationen 3, 4, 5 derzeit arbeitenden Bearbeiters, dessen Erfahrung sowie die Art und Anzahl des von diesem Bearbeiter bereits früher bearbeiteter Tickets umfassen. Darüber hinaus können die Kategorisierung und/oder Bewertung des Tickets, welche bei der Eingabe durch bzw. in dem Bewertungsmodul erfolgt ist, ebenfalls mit herangezogen werden. So kann beispielsweise bei der Kategorisierung des offenen Tickets als technische Fragestellung vorgegeben sein, dass derartige offene Tickets nur technisch qualifizierten Bearbeitern an den Bearbeitungsstationen 3, 4, 5 zugeordnet werden. Ist darüber hinaus bei der Bewertung bzw. Kategorisierung des Tickets festgestellt worden, dass es sich um ein bestimmtes, bekanntes technisches Problem handelt, so kann durch das Zuordnungsmodul (ATD Automatic Ticket Distribution) 32 ein Bearbeiter an einer Bearbeitungsstation 3, 4, 5 ausgewählt werden, der bereits derartige Anfragen mit diesen technischen Problemen früher bearbeitet hat, oder frühere gleiche Anfragen sofort anzeigen.

Sieht sich der Bearbeiter an der Bearbeitungsstation 3, 4, 5 nicht in der Lage das zugewiesene Ticket zu lösen oder stellt er fest, dass die Bewertung bzw. Kategorisierung falsch war, sodass diese geändert werden muss, oder kann der Bearbeiter lediglich eine Teillösung realisieren, so können von den Bearbeitungsstationen 3, 4, 5 die Tickets unverändert oder verändert wieder in den Ticketpool 31 zurückgeführt werden, wie dies durch die Verbindungen 43, 44 und 45 zwischen den Bearbeitungsstationen 3, 4, 5 und dem Ticketpool 31 schematisch dargestellt ist.

Das erfindungsgemäße Call - Center - Bearbeitungssystem gemäß dem dargestellten Ausführungsbeispiel ist jedoch nicht nur in der Lage gezielt Tickets automatisiert an geeignete Bearbeiter an Bearbeitungsstationen 3, 4, 5 zur Lösung des Tickets weiterzuleiten, wie dies bezüglich des Zusammenwirkens des Eingabemoduls 30, des Ticketpools 31, des Zuordnungsmoduls (ATD Automatic Ticket Distribution) 32 und der Bearbeitungsstationen 3, 4, 5 beschrieben worden ist, sondern das Call - Center - Bearbeitungssystem gemäß der Ausführungsform der Fig. 2 ist als intelligentes, selbstlernendes System ausgebildet, welches während des Betriebs Erkenntnisse aus dem Betrieb für die zukünftige Bearbeitung, also die Zuordnung von Tickets zu den Bearbeitungsstationen 3, 4, 5 bzw. den dort derzeit tätigen Bearbeitern nutzen kann.

Zu diesem Zweck ist ein Erfassungsmodul 33 realisiert, welches über die Verbindungen 40, 41, 42 Informationen über die Lösung des Tickets an der jeweiligen Bearbeitungsstation 3, 4, 5 erfasst. So kann das Erfassungsmodul Lösungsparameter, wie beispielsweise die Qualität der Lösung, die Lösungshäufigkeit sowie Vergleichswerte hierzu bezüglich der Lösung des Tickets und/oder des Bearbeiters an der Bearbeitungsstation erfassen. Die Lösungsgeschwindigkeit kann beispielsweise gemessen werden von dem Zeitpunkt an, an dem das offene Ticket erfasst wurde und dem Zeitpunkt, an dem der Bearbeiter der Bearbeitungsstation 3, 4, 5 das Ticket als abgeschlossen und gelöst quittiert. Die Qualität der Lösung kann durch eine Rückmeldung und Bewertung des Anfragenden erfolgen, beispielsweise wenn der Bearbeiter an der Bearbeitungsstation 3, 4, 5 beim Abschließen und Quittieren des Tickets eine Note des Anfragenden, die dieser bei der Übermittlung der Lösung vergibt, in das Call - Center - Bearbeitungssystem eingibt. Darüber hinaus können selbstverständlich auch weitere Lösungsparameter erfasst werden, wie beispielsweise die Lösungshäufigkeit, bei der die Anzahl der gelösten Fälle des Bearbeiters an der Bearbeitungsstation 3, 4, 5 zu den nicht gelösten Tickets oder teilgelösten Tickets in Bezug gesetzt wird. Darüber hinaus sind weitere Lösungsparameter denkbar.

Die Lösungsparameter können direkt über die dargestellte Verbindung 46 in eine Rückkopplungseinheit 35 des Zuordnungsmoduls (ATD Automatic Ticket Distribution) 32 eingegeben oder dieser zur Verfügung gestellt werden, sodass die Rückkopplungseinheit 35 anhand der übermittelten Lösungsparameter die Parameter zur Zuordnung von Tickets zu den Bearbeitungsstationen verändern kann.

Neben einer direkten Übermittlung der Lösungsparametern von dem Erfassungsmodul 33 zur Rückkopplungseinheit 35 können die erfassten Lösungsparameter auch in einer Speichereinheit 34 zwischengespeichert werden, wozu eine Verbindung 47 zwischen der Speichereinheit 34 und dem Erfassungsmodul 33 vorgesehen ist. In der Speichereinheit 34 bzw. einer oder mehreren entsprechenden Datenbanken können neben den Lösungsparametern zusätzlich auch weitere Daten über die entsprechenden Tickets, wie beispielsweise die entsprechende Bewertung und Kategorisierung der Tickets, der Inhalt des Tickets und die zugehörige Lösung sowie Bearbeiterdaten an den entsprechenden Bearbeitungsstationen gespeichert werden, wobei durch die Darstellung der Verbindung 48 zwischen Speichereinheit 34 und Zuordnungsmodul (ATD Automatic Ticket Distribution) 32 ersichtlich ist, dass die gespeicherten Daten in der Rückkopplungseinheit zur Veränderung der vordefinierten Zuordnungsparameter eingesetzt werden können.

Obwohl die vorliegende Erfindung anhand des dargestellten Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass andersartige Kombinationen von Merkmalen verwirklicht werden können oder einzelne Merkmale weggelassen werden können, ohne dass der Schutzbereich der beigefügten Ansprüche verlassen wird. Die Offenbarung der vorliegenden Erfindung schließt sämtliche Kombinationen der vorgestellten Einzelmerkmale mit ein, auch wenn diese nicht explizit beschrieben sind.

## Patentansprüche

1. Call - Center - Bearbeitungssystem mit einer Datenverarbeitungsanlage (1) mit mehreren Bearbeitungsstationen (3,4,5), an denen jeweils ein Bearbeiter Tickets bearbeiten kann, und einem Ticketpool (31), in dem eine Anzahl offener Tickets gespeichert sind,
**gekennzeichnet durch**
ein Zuordnungsmodul (ATD Automatic Ticket Distribution) (32), welches anhand vordefinierter Parameter ein zu bearbeitendes Ticket aus dem Ticketpool automatisiert einer Bearbeitungsstation (3,4,5) zur Bearbeitung zuordnet.

2. Call - Center - Bearbeitungssystem nach Anspruch 1,
**dadurch gekennzeichnet, dass**
die Datenverarbeitungsanlage (1) durch ein Netzwerk mit mindestens einem Computer (2) und mehreren Ein- und Ausgabegeräten (6,7,8,9,10,11) gebildet ist, wobei eine Bearbeitungsstation mindestens ein Eingabegerät und mindestens ein Ausgabegerät aufweist.

3. Call - Center - Bearbeitungssystem nach Anspruch 1 oder 2,
**dadurch gekennzeichnet, dass**
der Ticketpool (31) in einer Speichereinheit der Datenverarbeitungsanlage gespeichert ist.

4. Call - Center - Bearbeitungssystem nach einem der vorhergehenden Ansprüche,
**dadurch gekennzeichnet, dass**
ein Eingabemodul (30) vorhanden ist, mit welchem Tickets in den Ticketpool eingegeben werden, wobei das Eingabemodul insbesondere ein Bewertungsmodul (29) umfasst, mit dem ein in den Ticketpool einzugebendes Ticket bewertet, insbesondere kategorisiert wird.

5. Call - Center - Bearbeitungssystem nach einem der vorhergehenden Ansprüche,
**dadurch gekennzeichnet, dass**
mehrere Kommunikationsgeräte (21,22) vorhanden sind, die jeweils mit der Datenverarbeitungsanlage verbunden sind, um Kommunikationsdaten zu übermitteln, insbesondere auszutauschen.

6. Call - Center - Bearbeitungssystem nach einem der vorhergehenden Ansprüche,
**dadurch gekennzeichnet, dass**
das Zuordnungsmodul (ATD Automatic Ticket Distribution) (32) ein selbstlernendes System ist, welches durch Rückkopplung erfasster Lösungsparameter die vordefinierten Parameter zur Zuordnung von Tickets zu Bearbeitungsstationen variiert.

7. Call - Center - Bearbeitungssystem nach einem der vorhergehenden Ansprüche,
**dadurch gekennzeichnet, dass**
ein Erfassungsmodul (33) vorhanden ist, welches zur Erfassung von Lösungsparametern ausgebildet ist.

8. Call - Center - Bearbeitungssystem nach einem der vorhergehenden Ansprüche,
**dadurch gekennzeichnet, dass**
die Datenverarbeitungsanlage eine Speichereinheit (34) zur Speicherung von Vorgangsdaten und/oder Bearbeiterdaten aufweist.

9. Arbeitsverfahren zur Bearbeitung von Tickets eines Call - Centers, insbesondere mit einem Call - Center - Bearbeitungssystem nach einem der vorhergehenden Ansprüche, bei welchem eine Vielzahl von zu bearbeitenden Tickets als offene Tickets in einem Ticketpool (31) einer Datenverarbeitungsanlage (1) gespeichert werden, um an einer von mehreren Bearbeitungsstationen (3,4,5) der Datenverarbeitungsanlage von einem Bearbeiter bearbeitet zu werden,
**dadurch gekennzeichnet, dass**
ein Zuordnungsmodul (ATD Automatic Ticket Distribution) (32) der Datenverarbeitungsanlage automatisiert die Tickets einer Bearbeitungsstation (3,4,5) zur Bearbeitung zuordnet, wobei die Zuordnung der einzelnen Tickets zu jeweils einer Bearbeitungsstation (3,4,5) unter Berücksichtigung vorher definierter Parameter automatisiert erfolgt.

10. Verfahren nach Anspruch 9,
**dadurch gekennzeichnet, dass**
die Zuordnung der offenen Tickets zu den Bearbeitungsstationen (3,4,5) jeweils einzeln oder zusammengefasst in Gruppen erfolgt.

11. Verfahren nach Anspruch 9 oder 10,
**dadurch gekennzeichnet, dass**
die Zuordnung der offenen Tickets zu den Bearbeitungsstationen (3,4,5) auf Anforderung einer Bearbeitungsstation oder automatisiert auf Basis vorgegebener Kriterien und/oder erfasster Daten, insbesondere an der Bearbeitungsstation erfasster Daten erfolgt.

12. Verfahren nach einem der Ansprüche 9 bis 11,
**dadurch gekennzeichnet, dass**
die vordefinierten Parameter zur Zuordnung von Tickets zu Bearbeitungsstationen (3,4,5) mindestens ein Element aus der Gruppe umfassen, die die Qualifikation des an der Bearbeitungsstation angemeldeten Bearbeiters, die Erfahrung des an der Bearbeitungsstation angemeldeten Bearbeiters, und die Art und Anzahl der früher bereits von dem an der Bearbeitungsstation angemeldeten Bearbeiter bearbeiteten Tickets, Bewertung und Kategorisierung des Tickets umfasst.

13. Verfahren nach einem der Ansprüche 9 bis 12,
**dadurch gekennzeichnet, dass**
der oder die vordefinierten Parameter zur Zuordnung von Tickets zu Bearbeitungsstationen (3,4,5) durch Rückkopplung erfasster Lösungsparameter variiert werden.

14. Verfahren nach einem Anspruch 13,
**dadurch gekennzeichnet, dass**
mindestens ein Lösungsparameter aus der Gruppe ausgewählt wird, die die Lösungsgeschwindigkeit, die Qualität der Lösung, die Lösungshäufigkeit und die Vergleichswerte dieser Parameter einer Lösung und/oder eines Bearbeiters zu allen anderen Lösungen und/oder Bearbeitern oder zu Lösungen und/oder Bearbeitern mit ähnlichen Tickets enthält.

15. Verfahren nach einem der Ansprüche 9 bis 14,
**dadurch gekennzeichnet, dass**
bei der Eingabe der zu bearbeitenden Tickets in den Ticketpool die Tickets bewertet und/oder kategorisiert werden.

16. Softwareprogrammprodukt zur Durchführung des Arbeitsverfahrens nach einem der Ansprüche 9 bis 15 und/oder zum Betrieb des Call - Center - Bearbeitungssystems nach einem der Ansprüche 1 bis 8.
